(19) Europäisches Patentamt
European Patent Office
Office européen des brevets

(11) **EP 3 726 986 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **18826603.5**

(22) Anmeldetag: **18.12.2018**

(51) Internationale Patentklassifikation (IPC):
*A01N 25/34* (2006.01)    *A01N 59/20* (2006.01)
*A01N 59/16* (2006.01)    *A01P 1/00* (2006.01)
*C09D 5/14* (2006.01)

(52) Gemeinsame Patentklassifikation (CPC):
(C-Sets verfügbar)
**A01N 25/34; A01N 59/16; A01N 59/20; C09D 5/14**

(Forts.)

(86) Internationale Anmeldenummer:
**PCT/EP2018/085470**

(87) Internationale Veröffentlichungsnummer:
**WO 2019/121667 (27.06.2019 Gazette 2019/26)**

(54) **ANTIMIKROBIELLES SCHICHTMATERIAL**

ANTIMICROBIAL LAYERED MATERIAL

MATÉRIEL STRATIFIÉ ANTIMICROBIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2017 DE 102017130600**

(43) Veröffentlichungstag der Anmeldung:
**28.10.2020 Patentblatt 2020/44**

(73) Patentinhaber:
• **Fraunhofer-Gesellschaft zur Förderung der angewandten Forschung e.V.**
**80686 München (DE)**
• **Bio-Gate AG**
**90411 Nürnberg (DE)**

(72) Erfinder:
• **VISSING, Klaus-Dieter**
**28359 Bremen (DE)**

• **SALZ, Dirk**
**28359 Bremen (DE)**
• **STEINRÜCKE, Peter**
**90461 Nürnberg (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
WO-A1-2005/048708    WO-A1-2012/004364
WO-A1-2013/021409    WO-A1-2017/162502
WO-A2-2005/049699    WO-A2-2009/121970

(52) Gemeinsame Patentklassifikation (CPC): (Forts.)

C-Sets
**A01N 25/34, A01N 59/16**

**Beschreibung**

Die Erfindung betrifft ein antimikrobielles Schichtmaterial, umfassend eine Schicht mit einem partikulären bioziden Wirkstoff und darauf angeordnet eine Schicht als Transportkontrollschicht, wobei die Transportkontrollschicht abscheidbar oder abgeschieden ist in einem After-Glow PE-CVD-Verfahren. Die Erfindung betrifft ferner ein Substrat mit einem solchen antimikrobiellen Schichtmaterial beschichtet, die Verwendung einer in einem After-Glow PE-CVD-Verfahren abgeschiedenen plasmapolymeren Schicht als Transportkontrollschicht für einen partikulären bioziden Wirkstoff sowie ein Verfahren zum Herstellen eines antimikrobiellen Schichtmaterials und ein Verfahren zum Herstellen eines Substrates mit einem antimikrobiellen Schichtmaterial.

Im Stand der Technik besteht ein konstanter Bedarf, antibakterielle Beschichtungen auf verschiedene Anforderungen zu optimieren. Maßgeblich sind antibakterielle Prüfungen nach den Normen ASTM E 2149, JIS Z 2801/ISO 22196 und JIS L 1902/ISO 20743. Um diese Testungen erfolgreich zu bestehen, muss der Biozidrelease über die Eigenschaften der Transportkontrollschicht eingestellt werden.

Aus der DE 103 53 756 A1 ist ein Schichtmaterial bekannt, das eine partikuläre Silberschicht umfasst. Hier sind die Release-Eigenschaften aber insbesondere für Anwendungen, die zu einem frühen Zeitpunkt einen verbesserten Release benötigen, noch nicht ausreichend entwickelt.

Vor diesem Hintergrund war es Aufgabe der vorliegenden Erfindung, ein antimikrobielles Schichtmaterial anzugeben, das hinsichtlich seiner Release-Eigenschaften, insbesondere zu einem frühen Zeitpunkt des Einsatzes, verbessert ist.

Erfindungsgemäß wird diese Aufgabe gelöst durch ein antimikrobielles Schichtmaterial umfassend eine Schicht mit einem partikulären bioziden Wirkstoff und darauf angeordnet eine plasmapolymere Schicht als Transportkontrollschicht, wobei die Transportkontrollschicht abscheidbar oder abgeschieden ist in einem After-Glow PE-CVD-Verfahren, wobei in einem Parallelplattenreaktor für ein PE-CVD-Verfahren das Substrat so platziert ist, dass der Abstand zwischen Substrat und Plasmaelektrode wenigstens das dreißigfache der Dunkelraumzone beträgt, wobei die Dunkelraumzone der Kathodenfall ist, in der das Plasmapotential auf die Kathodenspannung fällt.

Überraschenderweise hat sich herausgestellt, dass Transportkontrollschichten, die in einem After-Glow-Verfahren abgeschieden wurden, über besonders günstige Release-Eigenschaften verfügen. Erfindungsgemäß liegt dann ein After-Glow-Verfahren vor, wenn in einem Parallelplattenreaktor für ein PE-CVD-Verfahren (Plasma-enhanced chemical vapor deposition-Verfahren) das Substrat so platziert ist, dass der Abstand zwischen Substrat und Plasmaelektrode wenigstens das Dreißigfache der Dunkelraumzone beträgt. Die Dunkelraumzone ist der Kathodenfall, in der das Plasmapotential auf die Kathodenspannung fällt.

Ein biozider Wirkstoff im Sinne der vorliegenden Anmeldung liegt dann vor, wenn dieser Wirkstoff eine antibakterielle Wirkung im Sinne der JIS Z 2801/ISO 22196 besitzt, d.h. insbesondere im Rahmen der dort beschriebenen Bedingungen für antibakterielle Oberflächen eine Bakterienreduktion von mindestens dem Faktor 100, bevorzugt ist jedoch, dass ein Biozid im Sinne dieser Erfindung eine Bakterienreduktion um mindestens den Faktor 1000 unter den gleichen Bedingungen aufweist.

Ein biozider Wirkstoff liegt dann partikulär vor, wenn er keine geschlossene Schicht bildet, sondern in distinkten, voneinander abgrenzbaren Partikeln oder Partikelagglomerationen vorliegt.

Bevorzugt ist ein erfindungsgemäßes Schichtmaterial, wobei die Transportkontrollschicht eine Schichtdicke von ≤ 320 nm, bevorzugt ≤ 160 nm und besonders bevorzugt ≤ 80 nm und von ≥ 5 nm, bevorzugt ≥ 20 nm besitzt.

Dabei ist die jeweilige Untergrenze bzw. die bevorzugte Untergrenze mit jeder einzelnen der Obergrenzen kombinierbar. Ganz besonders bevorzugt ist dabei, dass das antimikrobielle Schichtmaterial eine Transportkontrollschicht mit einer Schichtdicke von 20 bis 35 nm umfasst.

In den bevorzugten Schichtdickenbereichen, ganz besonders in den besonders bevorzugten, sorgt die erfindungsgemäß einzusetzende Transportkontrollschicht für ein besonders gutes Releaseprofil.

Bevorzugt wird eine erfindungsgemäße einzusetzende Transportkontrollschicht, die ein Grundmaterial besitzt, dass ausgewählt ist aus der Gruppe bestehend aus plasmapolymeren Schichten, umfassend die Elemente Si, O, C, Ti, Al, N und/oder H, wobei weiter bevorzugt ist, dass die plasmapolymere Schicht ausschließlich aus diesen Elementen besteht, wobei selbstverständlich nicht alle genannten Elemente vorhanden sein müssen.

Bevorzugt ist, dass die Transportkontrollschicht einen Siliziumanteil von 20 bis 60 Atom-% und/oder einen Kohlenstoffanteil von 10 bis 30 Atom-% und/oder einen Sauerstoffanteil von 30 bis 50 Atom-% besitzt, jeweils bezogen auf die Gesamtzahl aller mit XPs messbaren Atome, d.h. insbesondere ohne Wasserstoff.

Besonders bevorzugt ist in diesem Zusammenhang, dass die Transportkontrollschicht aus Kohlenstoff, Sauerstoff, Silizium sowie Wasserstoff besteht, wobei am meisten bevorzugt ist, dass der Anteil der Elemente Kohlenstoff, Silizium und Sauerstoff innerhalb der vorgenannten Bereiche liegt.

Bevorzugt ist ein antimikrobielles Schichtmaterial, wobei das partikuläre biozide Material eine Grenzgröße von ≤ 100 nm, bevorzugt ≤ 50 nm, weiter bevorzugt ≤ 20 nm besitzt, wobei die Grenzgröße diejenige Partikelgröße ist, die von 95 % der Partikel unterschritten wird.

Hierbei wird im Sinne des vorliegenden Textes die Partikelgröße im Zweifelsfall bestimmt wie im Messbeispiel 1 (siehe unten) beschrieben.

Überraschenderweise hat sich herausgestellt, dass das partikuläre biozide Material mit den bevorzugten Grenzgrößen von $\leq 80$ nm, bevorzugt $\leq 25$ nm, weiter bevorzugt $\leq 15$ nm besitzt, wobei die Grenzgröße diejenige Partikelgröße ist, die von 95 % der Partikel unterschritten wird.

Bevorzugt ist ein erfindungsgemäßes antimikrobielles Schichtmaterial, wobei das Verhältnis Schichtdicke der Transportkontrollschicht zur Grenzgröße der Partikel $\geq 1,4$, bevorzugt $\geq 10$ beträgt. Es hat sich überraschenderweise herausgestellt, dass das Verhältnis der Dicke der Transportkontrollschicht zur Grenzgröße der Biozidpartikel für das gewünschte Releaseprofil einen erheblichen positiven Beitrag liefern kann.

Erfindungsgemäß bevorzugt ist der biozide Wirkstoff Silber, Kupfer oder Zink oder ein organisches Biozid. Dabei sind Silber und Kupfer besonders bevorzugt, am meisten bevorzugt ist Silber.

Die bevorzugten metallischen Biozide können dabei bevorzugt im Rahmen von PVD-Verfahren, insbesondere von Sputtern oder Aufdampfen, aufgebracht werden. Zur Erzeugung partikulärer organischer Biozide sind im Stand der Technik eine Vielzahl von Methoden bekannt. So ist es zum Beispiel möglich, quaternäre Ammoniumverbindungen partikulär aus Gasphasen abzuscheiden, es stehen aber auch nasschemische Verfahren zur Verfügung. Ein bevorzugtes Verfahren für die Abscheidung von partikulären, insbesondere organischen Bioziden ist dabei der Tintenstrahldruck. Bevorzugte organische erfindungsgemäß einzusetzende Biozide sind dabei quaternäre Ammoniumverbindungen (z.B. Methacrylamidopropyltrimethylammoniumchlorid) und quaternäre Phosphoniumverbindungen.

Erfindungsgemäß bevorzugt ist ein antimikrobielles Schichtmaterial, wobei die Konzentration des bioziden Wirkstoffes 0,3 - 10 $\mu g/cm^2$, bevorzugt 0,5 - 5 $\mu g/cm^2$ und weiter bevorzugt 1 - 4 $\mu g/cm^2$ beträgt. Diese Konzentrationen gelten insbesondere für die metallischen Biozide und ganz besonders für Silber als Biozid.

Dabei wird die Flächenkonzentration des bioziden Wirkstoffes im Zweifelsfall in der Aufsicht, das heißt senkrecht von oben bestimmt. Sofern mehr als eine distinkte Schicht mit einem partikulären bioziden Wirkstoff vorliegt, wird die Flächenkonzentration für jede dieser Schichten gesondert bestimmt. Mit anderen Worten, für den bioziden Wirkstoff bei Multilayer-Systemen mit mehr als einer bioziden Schicht findet keine Aufsummierung seiner Konzentration über mehrere Schichten statt.

Die bevorzugten Schichtkonzentrationen unterstützen das gewünschte Releaseprofil.

Erfindungsgemäß bevorzugt ist ein antimikrobielles Schichtmaterial, wobei die plasmapolymere Schicht zu jeweils wenigstes 95 Atom-% aus den Elementen Ti, O und C oder aus den Elementen Si, O, N und C, bevorzugt aus den Elementen Si, O und C besteht, bezogen auf die Zahl der Atome bestimmt mittels XPS.

Erfindungsgemäß bevorzugt ist eine erfindungsgemäßes antimikrobielles Schichtmaterial, wobei die Transportkontrollschicht eine $O_2$-Permeabilität von $\geq 1000$ cm$^3$/(m$^2$ * Tag * bar) besitzt.

Die Bestimmung der $O_2$-Permeabilität wird im Zweifelsfall durchgeführt wir im Messbeispiel 2 beschrieben.

Die Sauerstoffdurchlässigkeit des bevorzugten antimikrobiellen Schichtmaterials belegt ein besonders gutes Releaseprofil. Dabei ist zu beachten, dass das Merkmal Sauerstoffdurchlässigkeit alleine noch kein hinreichender Beleg dafür ist, ob eine Transportkontrollschicht ein gewünschtes Releaseprofil besitzt oder nicht. Stattdessen müssen weitere Merkmale hinzutreten, so im vorliegenden Fall insbesondere der Schichtaufbau, der im After-Glow-Verfahren erzeugt werden kann.

Es ist selbstverständlich, dass die Entfärbung des Schichtmaterials mit 50%iger HzOz-Lösung abhängig von der Dicke der Schichten, insbesondere der Deckschicht ist. Dabei hat sich experimentell herausgestellt, dass die Entfärbungsdauer bei steigender Transportkontrollschichtdicke nicht linear sondern näherungsweise exponentiell ansteigt. Eine erfindungsgemäß einzusetzende Transportkontrollschicht ("abscheidbar oder abgeschieden in einem After-Glow PE-CVD") zeichnet sich dadurch aus, dass sie (bei gegebener Zusammensetzung der Transportkontrollschicht) bei einer Dicke von 40 nm in $\leq 25$ Minuten, bevorzugt $\leq 20$ Minuten, weiter bevorzugt $\leq 15$ Minuten, noch weiter bevorzugt $\leq 10$ Minuten und besonders bevorzugt $\leq 5$ Minuten vollständig entfärbt wird. Nur der Vollständigkeit halber sei erwähnt, dass im Zweifelsfall das Substrat, auf dem diese Entfärbungstests durchgeführt werden, Glas ist.

Eine Entfärbung lässt sich unter den Bedingungen des Messbeispieles 3 feststellen, wobei im Zweifelsfall die Variante 1 gewählt wird.

Im Sinne der vorliegenden Erfindung gilt eine Probe dann als entfärbt, wenn sie die Bedingungen des Messbeispiels 3 für Entfärbung erfüllt. In analoger Weise wie für metallische Biozide kann auch die Entfernung eines organischen Biozids aus der Schicht spektral verfolgt werden.

Die Entfärbung des erfindungsgemäßen bevorzugt silberhaltigen Schichtmaterials durch die entsprechende $H_2O_2$-Lösung ist ein guter Hinweis, dass tatsächlich eine erfindungsgemäß einzusetzende Transportkontrollschicht vorliegt. Die genannten bevorzugten Entfärbungsergebnisse lassen sich nur dann erreichen, wenn eine im After-Glow-Verfahren hergestellte oder herstellbare Beschichtung in der Kombination mit den erfindungsgemäß einzusetzenden Bioziden vorliegt. Die erfindungsgemäß einzusetzende Transportkontrollschicht gewährleistet nämlich eine ausreichende Zugänglichkeit des entfärbenden Materials zu den Proben.

Erfindungsgemäß bevorzugt ist ein erfindungsgemäßes antimikrobielles Schichtmaterial, wobei die Transportkontrollschicht nach Abscheidung und vor einer eventuellen Aktivierung über eine Oberflächenenergie von ≤ 48 mN/m verfügt, die gemessen wurde mit Testtinten der Firma Acrotec GmbH nach ISO 8296 .

Bevorzugt beträgt die entsprechende Oberflächenenergie ≤ 40 mN/m.

Erfindungsgemäß bevorzugt ist ein erfindungsgemäßes antimikrobielles Schichtmaterial, wobei auf der der Transportkontrollschicht abgewandten Seite der Biozidschicht eine (weitere) Schicht vorgesehen ist, bevorzugt in einer Ausgestaltungsform wie für die Transportkontrollschicht in einem der vorangehenden Ansprüche definiert.

Diese zusätzliche Schicht ist dabei auf der zum Substrat gewandten Seite der Transportkontrollschicht vorzusehen. Sie kann zum einen zur Haftvermittlung eingesetzt werden, zum anderen aber auch beispielsweise dazu dienen, negative Einflüsse des Substrates auf das Biozid bzw. den Release des Biozides abzumildern oder auszuschließen. Ein solcher negativer Einfluss könnte zum Beispiel eine ungewollte Redoxpaar-Bildung sein. Weiterhin kann die Vorbeschichtung zur Einstellung der Oberflächenenergie der Unterschicht benutzt werden.

Dabei ist es dem Fachmann freigestellt, diese zusätzliche Schicht für den gewünschten Effekt auszugestalten. In vielen Fällen - und dies ist bevorzugt - eignet sich für diese zusätzliche Schicht eine Ausgestaltungsform, wie sie oben für die Transportkontrollschicht definiert ist, insbesondere in bevorzugten Ausführungsformen. Dabei muss die Transportkontrollschicht nicht zwingend die gleiche Zusammensetzung wie die zusätzliche Schicht besitzen, es ist aber aus Abscheidungsbedingungen in manchen Fällen bevorzugt, die gleiche Schicht einzusetzen.

In vielen Fällen kann es erfindungsgemäß bevorzugt sein, dass das erfindungsgemäße antimikrobielle Schichtmaterial mehr als eine biozide Wirkstoffschicht umfasst. Dabei kann diese weitere Wirkstoffschicht so aufgebaut sein wie die erfindungsgemäß einzusetzende, sie kann aber auch anders aufgebaut sein, je nach Zweck ihres Einsatzes. Bevorzugt ist es allerdings, mehrere erfindungsgemäß einzusetzende Biozidschichten mit einem partikulären bioziden Wirkstoff, wie oben definiert, übereinander einzusetzen, wobei es selbstverständlich ist, dass diese Biozidschichten voneinander getrennt sind, bevorzugt durch eine Transportkontrollschicht, weiter bevorzugt ebenfalls in einer der als bevorzugt oben ausgeführten erfindungsgemäß einzusetzenden Formen.

Mithilfe der "Mehrlagen"-Biozid-Schichten sind in hervorragender Weise zusätzliche Releaseprofile einstellbar. Dies gilt insbesondere für den Fall, dass zum einen ein schneller Release gewünscht wird, zum anderen aber auch für den Fall, dass ein möglichst langfristiger Release erforderlich ist.

Teil der Erfindung ist auch ein Substrat mit einem erfindungsgemäßen antimikrobiellen Schichtmaterial. Dabei kann das erfindungsgemäße Substrat teilweise oder vollständig mit dem erfindungsgemäßen antimikrobiellen Schichtmaterial beschichtet sein. Bevorzugt ist, dass das Substrat wenigstens in dem Bereich mit den erfindungsgemäßen antimikrobiellen Schichtmaterial beschichtet ist, indem es potentiell mit Keimen in Berührung kommt, sofern es bestimmungsgemäß eingesetzt wird.

Erfindungsgemäß bevorzugt ist, dass das erfindungsgemäße Substrat mit dem erfindungsgemäßen antimikrobiellen Schichtmaterial ausgewählt ist aus der Gruppe bestehend aus Medizinprodukten für human- und/oder veterinärmedizinische Anwendungen, Hygieneprodukten und Verpackungsmaterial.

Medizinprodukte sind insbesondere Katheter, Wundabdeckungen, Wundauflagen, Kontaktlinsen, Implantate, wie medizinischen Nägel, Schrauben, Knochenfixationsnägel, Dentalimplantate, Hüftimplantate, Knieimplantate, Implantate zur Fixierung an der Wirbelsäule, Gefäßimplantate sowie Implantate, die nur vorübergehend implantiert werden, und medizinische Instrumente. Ausdrücklich zählen dazu auch Implantate und Instrumente für den Einsatz im veterinärmedizinischen Bereich.

Hygieneprodukte sind insbesondere Binden und Windeln.

Verpackungsmaterial kann insbesondere für Medizin- oder Hygieneprodukte dienen.

Erfindungsgemäße Substrate können auch Bauteile zum Herstellen oder Verarbeiten von Lebensmitteln sein. In Betracht kommen auch Beschichtungen für sonstige Produkte, bei denen eine besondere Hygiene erforderlich ist

Auf den erfindungsgemäßen Substraten, insbesondere auf den bevorzugten erweist sich das durch das erfindungsgemäße antimikrobielle Schichtmaterial ermöglichte Release-profil als besonders hilfreich.

Teil der Erfindung ist auch die Verwendung einer erfindungsgemäß einzusetzenden plasmapolymeren Schicht wie oben definiert als Transportkontrollschicht für einen partikulären bioziden Wirkstoff.

Teil der Erfindung ist auch ein Verfahren zum Herstellen eines erfindungsgemäßen antimikrobiellen Schichtmaterials umfassend die Schritte:

a) Abscheiden einer erfindungsgemäß einzusetzenden partikulären Biozidschicht, wie weiter oben definiert und

b) Abscheiden nach Schritt a) einer plasmapolymeren Transportkontrollschicht in einem Afterglow-CVD-Verfahren, wobei die Transportkontrollschicht bevorzugt ausgestaltet ist, wie oben definiert.

Teil der Erfindung ist auch ein Verfahren zum Herstellen eines erfindungsgemäßen Substrates mit einem antimikrobiellen Schichtmaterial, umfassen die Schritte:

a) Bereitstellen eines Substrates und

b) Abscheiden eines antimikrobiellen Schichtmaterials auf dem Substrat in einem wie vorher beschriebenen erfindungsgemäßen Verfahren zum Herstellen eines antimikrobiellen Schichtmaterials.

Mit den erfindungsgemäßen Verfahren, insbesondere in den bevorzugten Ausgestaltungen ganz besonders mit den bevorzugten Materialien lassen sich antimikrobielles Schichtmaterial bzw. antimikrobiell beschichtete Substrate herstellen, die über ein ausgezeichnetes produktgerechtes Releaseprofil verfügen. Mit diesen erfindungsgemäßen Substraten (mittels der erfindungsgemäßen antimikrobiellen Schichtmaterialien) lassen sich die oben genannten Standards unschwer erfüllen.

Beispiele:

Messbeispiel 1

Bestimmung der Partikelgröße:

Es wird ein FIB-Schnitt (Focused Ion Beam-Präparation) mit anschließender TEM - Abbildung (Transmissionselektronenmikroskopie) der zu untersuchenden Probe angefertigt), Bildausschnitt von 100 nm x 100 nm (Größe der Abbildung ca. 500x500 nm). Standard-Vorschrift: Partikel insbesondere Silberpartikel sind als Lage im FIB-TEM-Bild abgedeckt durch die Transport-Kontrollschicht erkennbar.
Man bewertet sich bei entsprechender Vergrößerung (120.000 bis 150.000-fach) nur solche Partikel, die von der Transportkontrollschicht vollständig bedeckt sind und bis zur Silberschicht (PVD-Schicht) durchreichen.
Teilchen, die aus der Transportkontrollschicht sichtbar herausragen, werden nicht ausgewertet.
Im Bildausschnitt werden passende Teilchen markiert und ausgemessen mit dem größten Teilchendurchmesser (Längsachse). Es werden Teilchen nach Größe sortiert. Die Teilchengröße des größten im Bildausschnitt ausgemachten Teilchens wird ggf. als Bezugsgröße festgelegt.
Sonderfall: Biozidpartikel sind als einzelne Partikel im FIB-TEM-Bild aufgelöst erkennbar.
Hier werden individuelle Partikel in der Abbildung vermessen. Es wird ein Bildausschnitt von 200 mal 200 nm festgelegt: Die Auflösung ist so zu wählen, dass die Gitterebenen der Silberpartikel als Schlieren / Schleier in den Partikeln dargestellt werden. In diesem Abschnitt identifiziert man die erkennbar größten Teilchen und ermittelt darunter die Partikel mit dem erkennbar größten Teilchendurchmesser (Längsachse). Partikel mit starken Einschnürungen (Verjüngung von mehr als 30% in der Querachse) werden als separate Partikel gewertet. Dieser Teilchendurchmesser wird zur Berücksichtigung der Partikelgröße festgelegt.

Messbeispiel 2

Messung der Sauerstoffpermeation

Für die Messung der Sauerstoffpermeation wird das Gerät OX-TRAN 2/20 der Firma Mocon, USA eingesetzt. Die Transportkontrollschicht wurde auf einer 10 cm x 10 cm großen Polypropylenfolie mit einer Dicke von 100 $\mu$m abgeschieden. Vor der Messung wird die Folie mit einer Blende aus Aluminiumfolie beklebt, die eine Öffnung von 5 cm$^2$ besaß, so dass die Messoberfläche um Faktor 10 reduziert wird. Der vom Gerät gemessene Permeationswert muss daher mit Faktor 10 multipliziert werden. Um den Permeationswert der Beschichtung zu bestimmen, wird die folgende Formel angewendet:

$$Qs = Qg*Qf / (Qf - Qg)$$

wobei Qg = Permeationswert der beschichteten Folie, Qf = Permeationswert der unbeschichteten Folie und Qs = Permationswert der Schicht ist.
Der Permeationswert Qf für Sauerstoff der unbeschichteten Folie beträgt 2341 cm$^3$/(tag*bar) bei einer Feuchtigkeit von 0%. Der genaue Messvorgang ist im Kapitel 8 "Testing Flat Film Samples" im Operator's Manual des Geräts der Firma Mocon. Minneapolis, USA zu entnehmen. Beträgt der Messwert der beschichteten Folie Qg 1035 cm$^3$/(tag*bar), so errechnet sich ein Permeationswert der Beschichtung Qs auf der Polypropylenfolie von 1855 cm$^3$/(tag*bar).

Messbeispiel 3

Entfärbung

Die Bestimmung erfolgt bei 25 °C Raumtemperatur.

Bevorzugt ist das Biozid für diesen Test partikuläres Silber.

Die Beschichtung wird mit 50%igen Wasserstoffperoxid untersucht.

Man bedeckt vorzugweise durch Eintauchen eine Probe mit mindestens 1 cm$^3$ 50%igen $H_2O_2$ pro cm$^2$ Schicht.

Das sichert, dass Peroxid in jedem Fall im Überschuss angeboten wird.

Variante 1 (bevorzugt): Zu Vergleichszwecken dient eine identische Beschichtung ohne abgeschiedenes Biozid, insbesondere Silber: Diese beschreibt bei ansonsten identischen Abscheidungsbedingungen eine entfärbte Schicht.

Variante 2 (vereinfacht): Zu Vergleichszwecken dient eine unbeschichtete Probe

Variante 3: Zu Vergleichszwecken dient eine identische Probe, die über eine Behandlung mit 50%igen $H_2O_2$ über mindestens 12 Stunden hergestellt wurde

Entfärbung: Die Probe wird in Wasserstoffperoxid entfärbt, die Entfärbung an der Probe wird spektral (UV-VIS Reflexionsspektroskopie bei nicht-transparenten Proben, UV-VIS Spektroskopie bei transparenten Proben) im Wellenlängenbereich von 320 nm bis 780 nm verfolgt.

Eine Probe gilt als entfärbt wenn:

- ihr Spektrum (Extinktion) durch die Peroxid-Behandlung verändert wird und

- das Spektrum der zu untersuchenden Probe durch die Behandlung mit Peroxid zu mindestens 90% dem Spektrum der Referenz angenähert hat. Dies gilt als erreicht, wenn die optische Absorptionskonstante k der entfärbten Probe im Wellenlängenbereich von 300 bis 500 nm eine Differenz zur Referenz von ≥ 0,01 aufweist.

Die zur Entfärbung benötigte Zeit wird registriert. Als Obergrenze für die Zeiterfassung gelten 12 h.

Im Vergleich mittels FIB-TEM-Abbildung (siehe Partikelgröße) zwischen nicht-entfärbter und entfärbter Probe ist die "Entfärbung" mit dem Entfernen der Biozidpartikel korreliert. Nach erfolgter Entfärbung dürfen maximal 10% der zuvor vorhandenen Partikel in oben beschriebener FIB-TEM-Abbildung in der Beschichtung eingebunden detektierbar sein.

Beschichtunqsbeispiele:

Eingesetzte Plasmaanlage:

Die Plasmaanlage PA9 hat ein Volumen von 346 l und arbeitet mit einer Hochfrequenzplasma-entladung (13.56 MHz). Die Plasmaelektrode (400 mm x 200 x 1 mm) hat einen Abstand zur hinteren Wand von 6,5 cm. Die Substrate werden in einem vorgegeben Abstand (Tabelle 2) auf der gleichen Höhe der Plasmaelektrode angeordnet. Die Arbeitsgase werden von oben in den Reaktor (Höhe = 76 cm, Breite= 68 cm, Tiefe=67 cm) eingelassen. Der Pumpenflansch befindet sich unten in der Mitte des Reaktors. Der Pumpenstand besteht aus einer 1200 m$^3$/h Rootspumpe und einer 80 m$^3$/h Vorpumpe. Die am Reaktor vorliegende Pumpleistung beträgt ca. 1000 m$^3$/h bei einem Arbeitsdruck von 0,02 mbar.

Versuchsbeschreibung:

Die Substrate (Glas, Al-metallisierte PET-Folie und Siliziumwafer) werden im vorgegeben Abstand auf einem Aluminiumblock befestigt. Der Al-Block selber liegt auf "floating potential". Die Schichtdicke bzw. -rate wird auf dem Siliziumwafer mittels Reflektrometrie und die Permeabilität der Schichten in einer HzOz-Lösung (50%, RT) bestimmt. Die Glassubstrate bzw. die metallisierte PET-Folie (80 nm Al auf 50 μm PET-Film) sind mit einer $SiO_xC_yH_z$-Schicht vorbeschichtet (Abgeschieden wie für die "Vorbeschichtung" in Tabelle 1 beschrieben) und mit Silber besputtert.

Die Abscheidung der metallischen Silberpartikel (Sputtern) erfolgt im gleichen Reaktor durch HF-Magnetronsputtern. Das Magnetron hat einen Durchmesser von 250 mm. Als Targetmaterial wird metallisches Silber (Reinheit: 99,99 %) verwendet. Als Arbeitsgas wird, nachdem der Basisdruck von 3*10$^{-3}$ mbar erreicht wurde, Argon mit einem Fluss von 100 sscm in die Kammer gegeben. Die Sputterleistung beträgt 450 W. Es wird ein Abstand von 50 cm von Target und Substrat gewählt. Nach einer Prozessdauer von 180 Sekunden entstehen auf dem Substrat Silberpartikel mit einem Durchmesser kleiner 100 nm und einer Konzentration von 2 $\mu$g/cm$^2$.

Auf die partikuläre Silberschicht (ca. 2 $\mu$g/cm$^2$) wird ohne Aktivierung die Transportkontrollschicht abgeschieden, wie in Tabelle 1 beschrieben.

Tabelle 1: Gasflüsse, Plasmaleistung und Prozessdrücke zur Herstellung der Transportkontrollschichten

|  | Vorbeschichtung | | Transportkontrollschicht | |
|---|---|---|---|---|
|  | Aktivierung | Abscheidung | Abscheidung | Aktivierung |
| O$_2$ [sccm] | 100 | 100 | 100 | 100 |
| HMDSO [sccm] | 0 | 10 | 5 | 0 |
| Leistung [W] | 160 | 160 | 160 | 160 |
| Zeit [s] | 120 | 120 | Tabelle 2 | 300 |
| Druck [mbar] | 0,020 | 0,025 | 0,023 | 0,02 |

Die Größe der Silberpartikel wurde mit Transmissionselektronenmikroskopie (TEM) bestimmt. Die Durchmesser der Silberpartikel beträgt ca. 15 nm. Die Farbe der Beschichtung ist auf den Glassubstraten rot-gelb und auf der metallisierten PET-Folie rot-gold.

Es wurde eine Abstandsvariation gefahren, um den Einfluss des Abstands Plasmaelektrode - Substrat auf die Permeabilität zu bestimmen. Anhand von Tabelle 2 ist klar zu erkennen, dass ein großer Abstand zu poröseren (After-Glow-)Schichten führt, da die Entfärbezeit mit wachsenden Abständen stark abnimmt.

| Prozess-Nummer | Abstand [cm] | Dicke [nm] | Zeit [s] | Rate [nm/s] | Entfärbungs-zeit [min] | OFE vor der Schichtaktivierung [mN/m] |
|---|---|---|---|---|---|---|
| 3857 | 5,0 | 48 | 165 | 0,29 | >180 | 48 |
| 3862 | 7,5 | 47 | 145 | 0,32 | 120 | 48 |
| 3869 | 10,0 | 42 | 120 | 0,35 | 30 | 48 |
| 3870 | 35,0 | 42 | 345 | 0,13 | 2 | 38 |
| 3855 | 50,0 | 45 | 540 | 0,08 | 0,3 | 38 |
|  |  |  |  |  |  |  |
| Vergleichsschichtsyton |  | 45 | 45 | 1,00 | > 180 min | 105 |

Vergleichschichtsyton entspricht dem Beispiel 1 aus der WO 2005/048708 A2, wobei zusätzlich auf das Substrat eine Unterschicht aufgebracht worden ist, die abgeschieden wurde, wie die Transportkontrollschicht aus Beispiel 1.

Im Ergebnis zeigt sich, dass verglichen mit dem Stand der Technik sowie mit Schichten, die nicht im After-Glow-Verfahren abgeschieden worden sind, die Entfärbungszeiten des erfindungsgemäßen Schichtsystems deutlich kürzer sind. Dies ist ein Hinweis auf ein bevorzugtes Release-Profil, das die erfindungsgemäß einzusetzenden Schichten ermöglichen.

**Patentansprüche**

1. Antimikrobielles Schichtmaterial, umfassend eine Schicht mit einem partikulären bioziden Wirkstoff und darauf angeordnet eine plasmapolymeren-Schicht als Transportkontrollschicht, wobei die Transportkontrollschicht abscheidbar oder abgeschieden ist in einem After-Glow PE-CVD-Verfahren, wobei in einem Parallelplattenreaktor für ein PE-CVD-Verfahren das Substrat so platziert ist, dass der Abstand zwischen Substrat und Plasmaelektrode wenigstens das dreißigfache der Dunkelraumzone beträgt, wobei die Dunkelraumzone der Kathodenfall ist, in der das Plasmapotential auf die Kathodenspannung fällt.

2. Antimikrobielles Schichtmaterial nach Anspruch 1, wobei die Transportkontrollschicht eine Schichtdicke von ≤ 320 nm, bevorzugt ≤ 160 nm und besonders bevorzugt ≤ 80 nm, ganz besonders bevorzugt ≤ 35 nm und von ≥ 5 nm, bevorzugt ≥ 20 nm besitzt.

3. Antimikrobielles Schichtmaterial nach Anspruch 1 oder 2, wobei das partikuläre biozide Material eine Grenzgröße von ≤ 80 nm, bevorzugt ≤ 25 nm, weiter bevorzugt ≤ 15 nm besitzt, wobei die Grenzgröße diejenige Partikelgröße ist, die von 95 % der Partikel unterschritten wird.

4. Antimikrobielles Schichtmaterial nach einem der vorangehenden Ansprüche, wobei das Verhältnis Schichtdicke der Transportkontrollschicht zur Grenzgröße der Partikel ≥1,4 ist.

5. Antimikrobielles Schichtmaterial nach einem der vorangehenden Ansprüche, wobei der biozide Wirkstoff Silber, Kupfer oder Zink ist oder wobei der biozide Wirkstoff ein organisches Biozid ist.

6. Antimikrobielles Schichtmaterial nach einem der vorangehenden Ansprüche, wobei die Konzentration des bioziden Wirkstoffes 0,3 - 10 $\mu$g/cm$^2$, bevorzugt 0,5 - 5 $\mu$g/cm$^2$ und weiter bevorzugt 1 - 4 $\mu$g/cm$^2$ beträgt.

7. Antimikrobielles Schichtmaterial nach einem der vorangehenden Ansprüche, wobei die plasmapolymere Schicht zu jeweils bis wenigstens zu 95 Atom-% aus den Elementen Ti, O und C oder aus den Elementen Si, O, C und N bevorzugt aus den Elementen Si, O und C besteht, bezogen auf die Zahl der Atome bestimmt mittels XPS.

8. Antimikrobielles Schichtmaterial nach einem der vorangehenden Ansprüche, wobei auf der der Transportkontrollschicht abgewandten Seite der Biozidschicht eine Schicht vorgesehen ist, bevorzugt in einer Ausgestaltungsform wie für die Transportkontrollschicht in einem der vorangehenden Ansprüche definiert.

9. Substrat mit einem antimikrobiellen Schichtmaterial nach einem der vorangehenden Ansprüche.

10. Substrat nach Anspruch 9, ausgewählt aus der Gruppe bestehend aus Medizinprodukten für human- und/oder veterinärmedizinische Anwendungen, insbesondere Implantaten und Wundabdeckungen, Hygieneprodukten und Verpackungsmaterial.

11. Verwendung einer plasmapolymeren Schicht wie in einem der vorangehenden Ansprüche definiert als Transportkontrollschicht für einen partikulären bioziden Wirkstoff.

12. Verfahren zum Herstellen eines antimikrobiellen Schichtmaterials nach einem der Ansprüche 1 bis 8, umfassend die Schritte:

a) Abscheiden einer partikulären Biozidschicht wie in einem der vorangehenden Ansprüche definiert und
b) Abscheiden nach Schritt a) einer plasmapolymeren Transportkontrollschicht in einem After-Glow PE-CVD Verfahren, wobei die Transportkontrollschicht bevorzugt ausgestaltet ist wie in einem der Ansprüche 2 bis 9 definiert.

13. Verfahren zum Herstellen eines Substrates mit einem antimikrobiellen Schichtmaterial nach Anspruch 9 oder 10, umfassend die Schritte:

a) Bereitstellen eines Substrates und
b) Abscheiden eines antimikrobiellen Schichtmaterials auf dem Substrat in einem Verfahren nach Anspruch 12.

**Claims**

1. Antimicrobial layer material comprising a layer with a particulate biocidal active ingredient and, on top of that, a plasma-polymeric layer as transport control layer, wherein the transport control layer is depositable or has been deposited in an afterglow PE-CVD method, wherein the substrate is positioned in a parallel plate reactor for a PE-CVD method in such a way that the distance between substrate and plasma electrode is at least thirty times the dark space zone, where the dark space zone is the cathode trap in which the plasma potential drops to the cathode potential.

**2.** Antimicrobial layer material according to Claim 1, wherein the transport control layer has a layer thickness of $\leq 320$ nm, preferably $\leq 160$ nm and more preferably $\leq 80$ nm, most preferably $\leq 35$ nm, and of $\geq 5$ nm, preferably $\geq 20$ nm.

**3.** Antimicrobial layer material according to Claim 1 or 2, wherein the particulate biocidal material has a limiting size of $\leq 80$ nm, preferably $\leq 25$ nm, further preferably $\leq 15$ nm, where the limiting size is that particle size undershot by 95% of the particles.

**4.** Antimicrobial layer material according to any of the preceding claims, wherein the ratio of layer thickness of the transport control layer to the limiting size of the particles is $\geq 1.4$.

**5.** Antimicrobial layer material according to any of the preceding claims, wherein the biocidal active ingredient is silver, copper or zinc, or wherein the biocidal active ingredient is an organic biocide.

**6.** Antimicrobial layer material according to any of the preceding claims, wherein the concentration of the biocidal active ingredient is 0.3-10 $\mu g/cm^2$, preferably 0.5-5 $\mu g/cm^2$ and further preferably 1-4 $\mu g/cm^2$.

**7.** Antimicrobial layer material according to any of the preceding claims, wherein the plasma-polymeric layer consists in each case to an extent of to at least 95 atom% of the elements Ti, O and C or of the elements Si, O, C and N, preferably of the elements Si, O and C, based on the number of atoms determined by means of XPS.

**8.** Antimicrobial layer material according to any of the preceding claims, wherein a layer is provided on the side of the biocide layer remote from the transport control layer, preferably in a configuration as defined for the transport control layer in any of the preceding claims.

**9.** Substrate comprising an antimicrobial layer material according to any of the preceding claims.

**10.** Substrate according to Claim 9, selected from the group consisting of medical products for human and/or veterinary medicine applications, especially implants and wound dressings, hygiene products and packaging material.

**11.** Use of a plasma-polymeric layer as defined in any of the preceding claims as transport control layer for a particulate biocidal active ingredient.

**12.** Method of producing an antimicrobial layer material according to any of Claims 1 to 8, comprising the steps of:

a) depositing a particulate biocidal layer as defined in any of the preceding claims and
b) after step a) depositing a plasma-polymeric transport control layer in an afterglow PE-CVD method, where the transport control layer is preferably configured as defined in any of Claims 2 to 9.

**13.** Method of producing a substrate comprising an antimicrobial layer material according to Claim 9 or 10, comprising the steps of:

a) providing a substrate and
b) depositing an antimicrobial layer material on the substrate in a method according to Claim 12.

**Revendications**

**1.** Matériel stratifié antimicrobien comprenant une couche avec un principe actif biocide particulaire et, disposée dessus, une couche en polymère de plasma en tant que couche de commande de transport, dans lequel la couche de commande de transport peut être déposée ou est déposée dans un procédé de dépôt chimique en phase vapeur assisté par plasma (PECVD) avec post-charge, dans lequel le substrat est placé dans un réacteur à plaques parallèles pour un procédé PECVD de telle sorte que la distance entre le substrat et l'électrode à plasma est au moins le triple de la zone de chambre noire, dans lequel la zone de chambre noire est la chute cathodique, dans laquelle le potentiel de plasma chute sur la tension de cathode.

**2.** Matériau stratifié antimicrobien selon la revendication 1, dans lequel la couche de commande de transport possède une épaisseur de couche $\leq 320$ nm, de manière préférée $\leq 160$ nm et de manière particulièrement préférée $\leq 80$ nm, de manière très particulièrement préférée $\leq 35$ nm et $\geq 5$ nm, de manière préférée $\geq 20$ nm.

**3.** Matériau stratifié antimicrobien selon la revendication 1 ou 2, dans lequel le matériau biocide particulaire possède une taille limite ≤ 80 nm, de manière préférée ≤ 25 nm, de manière davantage préférée ≤ 15 nm, dans lequel la taille limite est cette taille de particule, qui précisément n'est pas dépassée par 95 % des particules.

**4.** Matériau stratifié antimicrobien selon l'une quelconque des revendications précédentes, dans lequel le rapport de l'épaisseur de couche de la couche de commande de transport par rapport à la taille limite des particules est > 1,4.

**5.** Matériau stratifié antimicrobien selon l'une quelconque des revendications précédentes, dans lequel le principe actif biocide est de l'argent, du cuivre ou du zinc ou dans lequel le principe actif biocide est un biocide organique.

**6.** Matériau stratifié antimicrobien selon l'une quelconque des revendications précédentes, dans lequel la concentration du principe actif biocide est de 0,3 - 10 $\mu$g/cm$^2$, de manière préférée de 0,5 - 5 $\mu$g/cm$^2$ et de manière davantage préférée de 1 - 4 $\mu$g/cm$^2$.

**7.** Matériau stratifié antimicrobien selon l'une quelconque des revendications précédentes, dans lequel la couche en polymère de plasma est constituée respectivement jusqu'à au moins 95 % atom. des éléments Ti, O et C ou des éléments Si, O, C et N, de manière préférée des éléments Si, O et C par rapport au nombre des atomes défini par XPS.

**8.** Matériau stratifié antimicrobien selon l'une quelconque des revendications précédentes, dans lequel une couche est prévue sur le côté, opposé à la couche de commande de transport, de la couche biocide, de manière préférée sous une forme de configuration telle que définie pour la couche de commande de transport dans l'une quelconque des revendications précédentes.

**9.** Substrat avec un matériau stratifié antimicrobien selon l'une quelconque des revendications précédentes.

**10.** Substrat selon la revendication 9, choisi parmi le groupe constitué de produits médicaux pour des applications en médecine humaine et vétérinaire, en particulier d'implants et de pansements, de produits d'hygiène et de matériau d'emballage.

**11.** Utilisation d'une couche en polymère de plasma telle que définie dans l'une quelconque des revendications précédentes en tant que couche de commande de transport pour un principe actif biocide particulaire.

**12.** Procédé de fabrication d'un matériau stratifié antimicrobien selon l'une quelconque des revendications 1 à 8, comprenant les étapes :

a) de dépôt d'une couche biocide particulaire telle que définie dans l'une quelconque des revendications précédentes, et
b) de dépôt après l'étape a) d'une couche de commande de transport en polymère de plasma dans un procédé PECVD post-charge, dans lequel la couche de commande de transport est configurée de manière préférée ainsi qu'elle est définie dans l'une quelconque des revendications 2 à 9.

**13.** Procédé de fabrication d'un substrat avec un matériau stratifié antimicrobien selon la revendication 9 ou 10, comprenant les étapes :

a) de mise à disposition d'un substrat et
b) de dépôt d'un matériau stratifié antimicrobien sur le substrat dans un procédé selon la revendication 12.

**IN DER BESCHREIBUNG AUFGEFÜHRTE DOKUMENTE**

**In der Beschreibung aufgeführte Patentdokumente**

- DE 10353756 A1
- WO 2005048708 A2